# EUROPEAN PATENT APPLICATION

(11) **EP 1 923 722 A1**
(43) Date of publication of application: **21.05.2008**
(21) Application number: 06797265.3
(22) Date of filing: 01.09.2006
(51) Int. Cl.: G01S 17/36, G01S 7/481, G02B 26/08

(54) **MIXING APPARATUS AND DISTANCE MEASURING APPARATUS USING SAME**

(30) Priority: 05.09.2005 JP 2005256174
(71) Applicant: Kabushiki Kaisha TOPCON, Tokyo 174-8580 (JP)
(72) Inventor: KAWASHIMA, Hiroyuki, Tokyo 174-8580 (JP); FUJINO, Makoto, Tokyo 174-8580 (JP); GOTO, Yoshiaki, Tokyo 174-8580 (JP); NAKANISHI, Michiko, Tokyo 174-8580 (JP); MARUYAMA, Hirotake, Tokyo 174-8580 (JP); KOBAYASHI, Akio, Tokyo 174-8580 (JP)
(74) Representative: Pfenning, Meinig & Partner GbR
(86) International application number: PCT/JP2006/317323
(87) International publication number: WO 2007/029613

(57) **Abstract**

For the purpose of mixing laser light (P0) from a laser light source (18), the laser light (P0) is made incident on a first end surface of an optical fiber (24), and is emitted from a second end surface of the optical fiber (24). Subsequently, laser light (P1) emitted from the second end surface of the optical fiber (24) is made incident on a first end surface of an optical fiber (28), and is emitted from a second end surface of the optical fiber (28). A swinging micro-electromechanical system (27) having a mirror plate (27a) is interposed between the second end surface of the optical fiber (24) and the first end surface of the optical fiber (28). Thus, the mirror plate (27a) is swung, and a laser beam (P4) is thereby shifted and mixed.

## Description

### TECHNICAL FIELD

The present invention relates to a mixing apparatus to be used for a laser light source and a distance measuring apparatus using the mixing apparatus.

### BACKGROUND ART

It has been heretofore said that it is difficult to accurately measure a long distance by use of a distance measuring apparatus using laser light. This is because the bandwidth of a wavelength of the laser light used for the apparatus is narrow, the laser light is easy to interfere, and unevenness of the laser light emitted from the apparatus often makes the distance measurement inaccurate.

With this taken into consideration, a proposal has been put forward for a distance measuring apparatus configured to mix laser light after guiding the laser light to an optical fiber. For the purpose of eliminating unevenness of laser light emitted from the apparatus, however, the optical fiber needs to be long enough, which leads to a problem of enlargement of the entire apparatus.

For the purpose of solving this problem, a proposal has been made for a mixing apparatus to be used for the distance measuring apparatus. The mixing apparatus is structured of a phase plate including a diffraction grating and driving means for driving the phase plate (see Patent Document 1, for example). The mixing apparatus is designed to revolve the phase plate by driving a motor as the driving means, and to thus mix laser light emitted from its semiconductor laser. Thereby, the mixing apparatus eliminates the unevenness of the laser light emission, and even out the laser light.
Patent Document 1: Japanese Patent Application Publication No. 2000-162517 bulletin

### DISCLOSURE OF THE INVENTION

### PROBLEMS TO BE SOLVED BY THE INVENTION

However, the mixing apparatus of this conventional type has the following problems because of its design to revolve the phase plate by driving the motor, whereby mixing laser light to eliminate unevenness of the laser light emission. It is difficult to cause the mixing apparatus to mix laser light at a high speed, and also the mixing apparatus is extremely power consuming and causes larger sound noise.

An object of the present invention is to provide a mixing apparatus whose power consumption and sound noise is small, and to provide a distance measuring apparatus using the mixing apparatus.

### MEANS FOR SOLVING PROBLEMS

For the purpose of solving the foregoing problems, the present invention is a mixing apparatus which mixes laser light in the middle of guiding the laser light from a laser light source to an emitter, characterized by comprising: a reflective swinging device having a swingable mirror surface; an optical fiber which guides the laser light to the emitter; and an optical system which guides the laser light from the laser light source to the mirror surface of the reflective swinging device, and which collects the laser light reflected off the mirror surface toward an input end of the optical fiber, wherein the reflective swinging device moves the laser light within a range of incidence of the laser light on the input end of the optical fiber.

Furthermore, the present invention is a mixing apparatus which mixes laser light in the middle of guiding the laser light from a laser light source to an emitter, characterized by comprising: a first reflective swinging device having a swingable mirror surface; a first optical fiber which guides the laser light to the emitter; a second optical fiber which guides the laser light to the emitter; a second reflective swinging device having a swingable mirror surface, and which functions as an optical switch for selectively switching a transmission path of the laser light between the first optical fiber and the second optical fiber; a first optical system which guides the laser light from the laser light source to the mirror surface of the first reflective swinging device; and a second optical system which guides the laser light reflected off the mirror surface to the mirror surface of the second reflective swinging device, wherein the first reflective swinging device moves the laser light within a range of incidence of the laser light on an input end of the first optical fiber or on an input end of the second optical fiber.

Moreover, the present invention is a distance measuring apparatus which measures a distance by irradiating laser light on an object of measurement and which receives light reflected off the object of measurement, characterized by comprising a mixing apparatus which mixes the laser light in the middle of guiding the laser light from a laser light source to an emitter, wherein the mixing apparatus includes: a reflective swinging device having a swingable mirror surface; an optical fiber which guides the laser light to the emitter; and an optical system which guides the laser light from the laser light source to the mirror surface of the reflective swinging device, and which collects the laser light reflected off the mirror surface toward an input end of the optical fiber, and wherein the reflective swinging device moves the laser light within a range of incidence of the laser light on the input end of the optical fiber.

Additionally, the present invention is a distance measuring apparatus which measures a distance by irradiating laser light on an object of measurement and receiving light reflected off the object of measurement, characterized by comprising a mixing apparatus which mixes the laser light in the middle of guiding the laser light from a laser light source to an emitter, wherein the mixing apparatus includes: a first reflective swinging device having a swingable mirror surface; a first optical fiber which guides the laser light to the emitter; a second optical fiber which guides the laser light to the emitter; a second reflective swinging device having a swingable mirror surface, and which functions as an optical switch for selectively switching a transmission path of the laser light between the first optical fiber and the second optical fiber; a first optical system which guides the laser light from the laser light source to the mirror surface of the first reflective swinging device; and a second optical system which guides the laser light reflected off the mirror surface to the mirror surface of the second reflective swinging device, and wherein the first reflective swinging device moves the laser light within a range of incidence of the laser light on an input end of the first optical fiber or on an input end of the second optical fiber.

### EFFECTS OF THE INVENTION

The present invention brings about an effect of enabling a mixing apparatus to mix laser light at a higher speed and to minimize its sound noise, by employing an apparatus of a reflective type.

In addition, the present invention allows selection of an appropriate strength for laser light depending on characteristics of an object of measurement. This is because a distance measuring apparatus is designed to change the power of the laser light emitted from its emitter by selectively switching light guiding paths for guiding the laser light to the emitter.

### BRIEF DESCRIPTION OF THE DRAWINGS

FIG. 1 is an explanatory diagram illustrating embodiment 1 of a distance measuring apparatus using a mixing apparatus according to the present invention.
FIG. 2 is a perspective view illustrating a rough structure of the mixing apparatus illustrated in FIG. 1.
FIG. 3 is a schematic diagram illustrating how the mixing apparatus illustrated in FIG. 2 operates.
FIG. 4 is an explanatory diagram illustrating how laser light is shifted when falling incident on a second optical fiber illustrated in FIG. 3.
FIG. 5 is an optical diagram illustrating a chief part of embodiment 2 of the mixing apparatus according to the present invention.
FIG. 6 is an optical diagram illustrating a chief part of a modification of the mixing apparatus illustrated in FIG. 5.

### EXPLANATION OF REFERENCE NUMERALS

- 18: semiconductor laser (laser light source)
- 24: optical fiber
- 28: optical fiber
- 27: micro-electromechanical system
- 27a: mirror plate

### BEST MODES FOR CARRYING OUT THE INVENTION

Hereinafter, -embodiments as modes for carrying out a mixing apparatus and a distance measuring apparatus using this mixing apparatus according to the present invention will be described on the basis of the drawings.

### EMBODIMENT 1

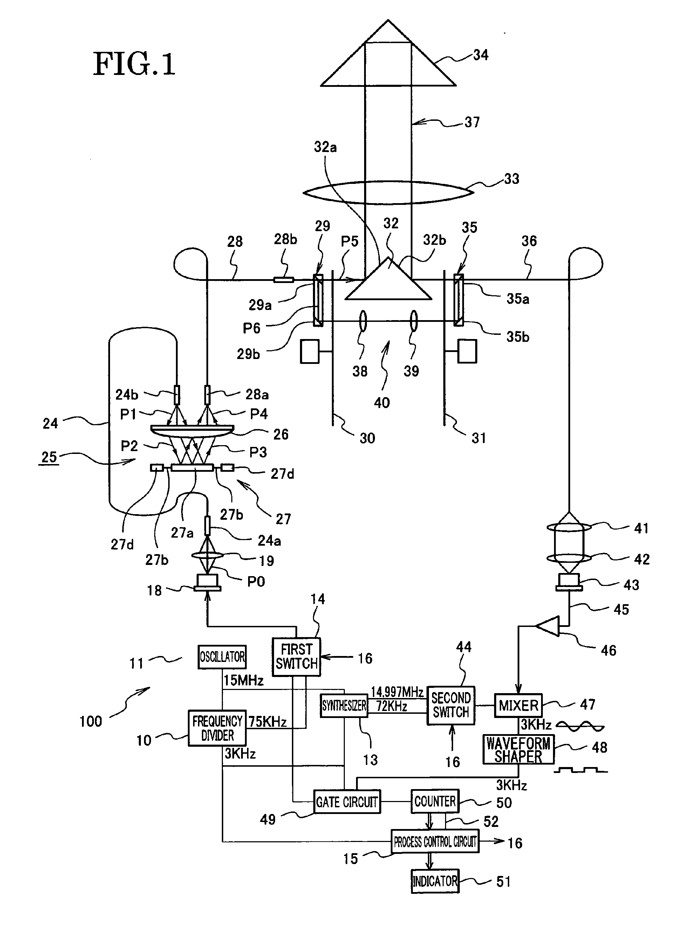

Descriptions will be provided for a distance measuring apparatus 100 using modulated light, on the basis of FIG. 1.

A frequency divider 10 of the distance measuring apparatus 100 divides a signal with a frequency of 15MHz which is transmitted from an oscillator 11, and thus generates two signals: a signal with a frequency of 75kHz and a signal with a frequency of 3kHz.

A synthesizer 13 generates a signal with a frequency of 14.997MHz which is the difference between 15MHz of the signal from the oscillator 11 and 3kHz of the signal from the frequency divider 10, as well as a signal with a frequency of 72kHz which is 24 times as large as 3kHz of the signal from the frequency divider 10.

On the basis of a signal 16 from a process control circuit 15, a first switch 14 outputs any one of the signal with a frequency of 15MHz and the signal with a frequency of 75kHz. It should be noted that the process control circuit 15 is arithmetic processing means.

The mixing apparatus includes a collimate lens 26, a reflective swinging device 25 and a mixing optical fiber 28. Extremities of the optical fiber are processed as an input end 28a and an output end 28b, respectively. The diameter of the optical fiber 28 is 300 µm, for example.

A semiconductor laser 18 is driven with an output signal from the first switch 14, and thus emits modulated laser light P0. The laser light P0 thus emitted is made incident on an input end 24a through a lens 19, is the input end 24a obtained by processing one of the end surfaces of a light-guiding optical fiber 24. It should be noted that the semiconductor laser 18 is a laser light source.

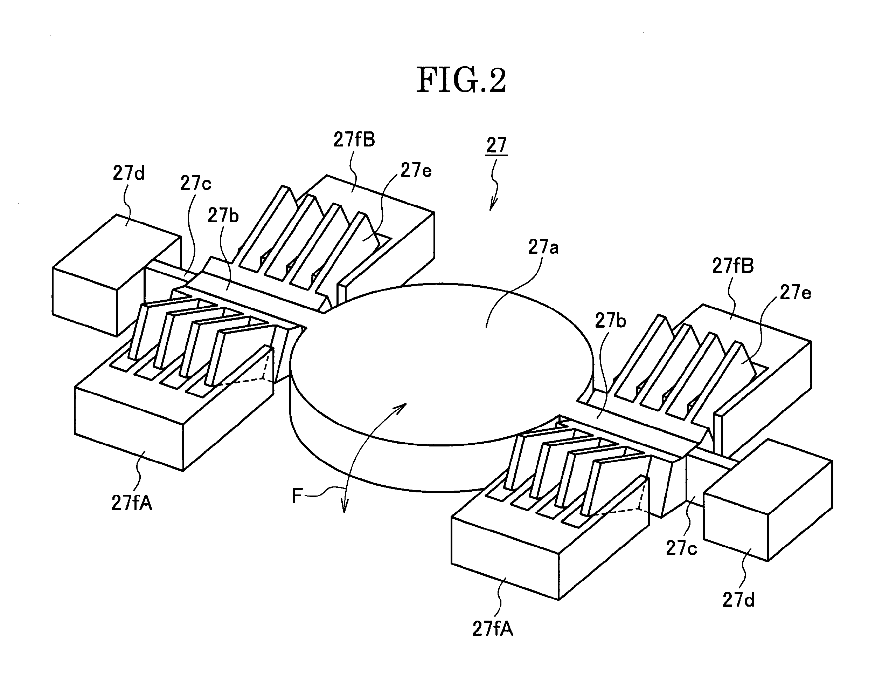

The reflective swinging device 25 is provided between the light paths of the optical fiber 24 and the second optical fiber 28, as illustrated in FIG. 2 in a magnified manner. This reflective swinging device 25 is structured of MEMS (a micro-electromechanical systems) 27.

In this respect, MEMS is an abbreviation of micro-electromechanical systems, and is a generic term for a micro-device having mechanical elements and electronic elements in combination. The MEMS is a technology for introducing a new function of enabling a chip or board to have movable parts therein, which function has never been included in semiconductor devices of a conventional type. It is awaited that, as a new platform technology, the function of this kind will be applied to input and output parts as well as to various sensors.

The reflective swinging device 25 includes a disc-shaped mirror plate 27a. The diameter of this mirror plate 27a is approximately 1mm, for example. Paired shaft parts 27b and 27b are formed on the peripheral surface of this mirror plate 27a in a way that the paired shaft parts 27b and 27b extend therefrom in the same direction as the diameter of the mirror plate 27a extends.

Extremities of the paired shaft parts 27b and 27b are respectively connected to fixing parts 27d and 27d via spring parts 27c and 27c. Movable combs 27e and 27e are formed in the middle of the shaft parts 27b and 27b. With regard to one of the shaft parts 27b and 27b, a fixed comb 27fA faces one of the movable combs 27e, and the other fixed comb 27fB faces the other of the movable combs 27e. With regard to the other of the shaft parts 27b and 27b, a fixed comb 27fA faces one of the movable combs 27e, and the other fixed comb 27fB faces the other of the movable combs 27e. The movable combs 27e and 27e, the fixed combs 27fA and 27fB, as well as the fixed combs 27fA and 27fB constitute a part of an actuator.

The mirror plate 27a is swung about the shaft parts27b and 27b in a direction indicated by an arrow F, when an AC voltage applied to the fixed combs 27fA and 27fB as well as the fixed combs 27fA and 27fB whereas each movable comb 27e is grounded and charged with a high frequency of, for example, 1kHz. FIG. 2 illustrates the configuration in which the mirror plate 27a is swung about the single axis, and the descriptions have been for the configuration. Instead, the configuration may be equipped with another paired shaft parts extending in a direction orthogonal to the direction in which the shaft parts 27b and 27b extend, so that the mirror plate 27a is swung about the two axes. In other words, the mirror plate 27a may be swung about two axes.

It should be noted that although the same voltage signals may be applied to the fixed combs 27fA and 27fB, voltage signals with different waveforms may otherwise be applied thereto. Examples of the application of signals with different waveforms include: application of a signal with a sine wave and a signal with a cosine wave respectively to the fixed comb 27fA and the fixed comb 27fB with the fixing part 27d being grounded; and application of a signal with a sine wave to the fixed comb 27fB with the fixed comb 27fA and the fixing part 27d being grounded.

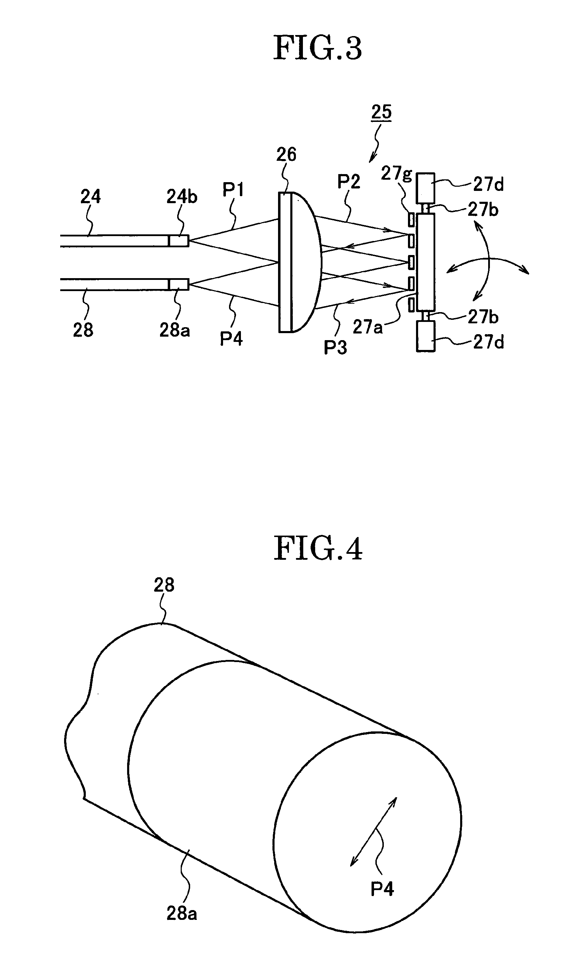

A diffraction grating plate 27g schematically illustrated in FIG. 3 is formed on the front surface of the mirror plate 27a. This diffraction grating plate 27g is used to eliminate unevenness of laser light emission through its cooperation with the mirror plate 27a, and further to even out the laser light emission. It should be noted that the diffraction grating part 27g is capable of further enhancing the mixing effect.

As illustrated in FIG. 3, laser light P1 introduced to the first optical fiber 24 and emitted from an output end 24b is turned into a parallel luminous flux P2 by use of the collimate lens 26. The parallel luminous flux P2 is then guided to the diffraction grating plate 27g and the mirror plate 27a to be diffracted by the diffraction grating plate 27g, as well as to be reflected by the mirror plate 27a.

The reflected light P3 is collected into convergent light P4 by the collimate lens 26 that is an optical system. The convergent light P4 is made incident on the input end 28a of the mixing optical fiber 28. In this respect, because the mirror plate 27a swings about the shaft parts 27b and 27b, the position of incidence of the convergent light P4 on the input end 28a is shifted within a range of incidence of the convergent light P4 on the input end 28a, as schematically illustrated in FIG. 4. To be more specific, the convergent light P4 is moved within the range of incidence of the convergent light P4 on the input end 28a. As a result, the laser light P0 whose emission is uneven is shifted (moved) in short, quick motions, and is formed into different light guiding paths. This evens out an uneven distribution of the power of laser light P0.

FIG. 4 illustrates a linear and periodical locus of the convergent light P4 as one example. However, a circular locus, a radial locus, or a locus termed as a Lissajous figure may be adopted instead of the linear locus.

The light path of laser light emitted from the output end 28b of the optical fiber 28 is divided into two light paths by a dividing prism 29. Laser light P5 moving to one of the two light paths passes through a dividing part 29a of the dividing prism 29, subsequently passes through a chopper 30, and is thereafter reflected by a reflective surface 32a of a prism 32 constituting a part of an emitter. The resultant laser light P5 is turned into a parallel luminous flux by an objective lens 33, and is emitted to the outside of the apparatus as a measuring beam. The emitter is constituted of the dividing prism 29, the prism 32, the objective lens 33 and the like.

The measuring beam is formed into an external distance measuring light path 37, in which the measuring beam is reflected by a reflector, such as a corner cube 34, serving as an object of measurement placed at a point of measurement. After that, the measuring beam thus reflected passes the objective lens 33 again, and is subsequently reflected by a reflective surface 32b of the prism 32, thereafter passing a gray filter 31. The resultant measuring beam passes a dividing part 35a of a dividing prism 35, and finally falls incident on a light-receiving fiber 36.

Laser light P6 moving to the other of the two light paths is formed into an internal reference light path 40, in which the laser light P6 is reflected by the dividing parts 29a and 29b of the dividing prism 29, thereafter passes the chopper 30, and is subsequently turned into a parallel luminous flux by a lens 38. After that, the resultant laser light P6 is collected by a lens 39, and passes the gray filter 31, as well as is reflected by the dividing parts 35b and 35a of the dividing prism 35, and falls incident on the light-receiving optical fiber 36.

The chopper 30 alternately selects the internal reference light path 40 and the external distance measuring light path 37. The gray filter 31 adjusts the light power level of each of the internal reference light path 40 and the external distance measuring light path 37. The light falling incident on the light-receiving optical fiber 36 is received by a light-receiving element 43 after passing lenses 41 and 42. In this respect, the light-receiving element 43 is a light receiver.

The internal reference light path 40 aims at preventing an error in data on measurement due to phase change, caused by a temperature drift or the like in the electrical circuit constituting the distance measuring apparatus. Accurate data is obtainable through subtracting a measurement value acquired from the internal reference light path 40 from a measurement value acquired from the external distance measuring light path 37.

On the basis of the signal 16 from the process control circuit 15, a second switch 44 outputs any one of the signal with the frequency of 14.997MHz and the signal with the frequency of 72kHz. An output from the light-receiving element 43 is amplified by an amplifier 46 after passing a capacitor 45, and then inputted to a mixer 47. The mixer 47 mixes the signal from the amplifier 46 and the signal from the second switch 44 together, and thus forms a beat signal, hence outputting a sine wave with a frequency of 3kHz by detecting the beat signal. A waveform shaper 48 shapes the sine wave with the frequency of 3kHz into a rectangular wave, and thus outputs a signal having the rectangular wave (hereinafter referred to as a "beat down signal").

A gate circuit 49 receives the signal with the frequency of 3kHz from the frequency divider 10 as a start signal, and receives the signal from the waveform shaper 48 as a stop signal, thus outputting the signal with the frequency of 15MHz from the oscillator 11 to a counter 50 between receptions of the start and stop signals. The phase difference is measured by causing signals each with the frequency of 15MHz to be counted by the counter 50.

A count value obtained by use of the counter 50 is a total number of signals each with the frequency of 15MHz which is obtained after the measurement is made N times. In order for the process control circuit 15 to acquire the number N, the signal with the frequency of 3kHz from the frequency divider 10 is supplied to the process control circuit 15. After the counting is made N times, a reset signal 52 is supplied from the process control circuit 15 to the counter 50, and the counter 50 is thus put into a reset condition. The count value obtained as the result of making the counting N times is converted by the process control circuit 15 to an average by multiplying the count value by 1/N. Thereafter, the count value is converted to a distance, and is thus displayed as a measured distance value on an indicator 51.

For the purpose of causing the output from the mixer 47 to have a frequency of 3kHz, the output signal from the first switch 14 and the output signal from the second switch 44 are controlled on the basis of the signal 16 from the process control circuit 15. Specifically, the signals are controlled in order that the frequency of the output signal from the second switch 44 should be 14.997MHz when the frequency of the output signal for the first switch 14 is 15MHz, and concurrently in order that the frequency of the output signal from the second switch 44 should be 72kHz when the frequency of the output signal from the first switch 14 is 75kHz.

The reason why the semiconductor laser 18 is modulated by use of the two frequencies including 15MHz and 75kHz is that 15MHz corresponding to a wavelength of 20m is used for a precise measurement whereas 75kHz corresponding to a wavelength of 4000m is used for a rough measurement.

In addition, the reason why the frequency of 15MHz and the frequency of 75kHz are both converted to the frequency of 3kHz is that the resolution for the phase measurement is increased by making the measurement through substituting the phase corresponding to 15MHz and the phase corresponding to 75kHz each with the phase corresponding to 3kHz.

In the case of the embodiment of the present invention, the reflected light P3 is shifted by the MEMS 27 with a high frequency, and the position of incidence of the reflected light P3 on the input end 28a of the optical fiber 28 is changed frequently. For this reason, the reflected light P3 is mixed and evened out while being transmitted in the optical fiber 28, and the resultant reflected light P3 is emitted from the output end 28b of the optical fiber 28. In this manner, even though the laser light emitted from the semiconductor laser 18 is uneven, the present embodiment makes it possible to eliminate the unevenness of the laser light emission and accordingly to even out the laser light while the laser light is transmitted in the optical fiber 24, goes through the MEMS 27, transmitted in the optical fiber 28, and is emitted from the output end 28 of the optical fiber 28.

The foregoing descriptions have been provided for the mixing apparatus citing the example in which the mixing apparatus is used for the frequency-modulating distance measuring apparatus. This mixing apparatus is similarly capable of being used for a pulse-range-finder distance measuring apparatus using laser light as its range-finder light.

In addition, the embodiment of the present invention makes it possible for the mixing apparatus to mix laser light at a high speed with less power consumption and sound noise, by employing the MEMS 27 for the mixing apparatus.

### EMBODIMENT 2

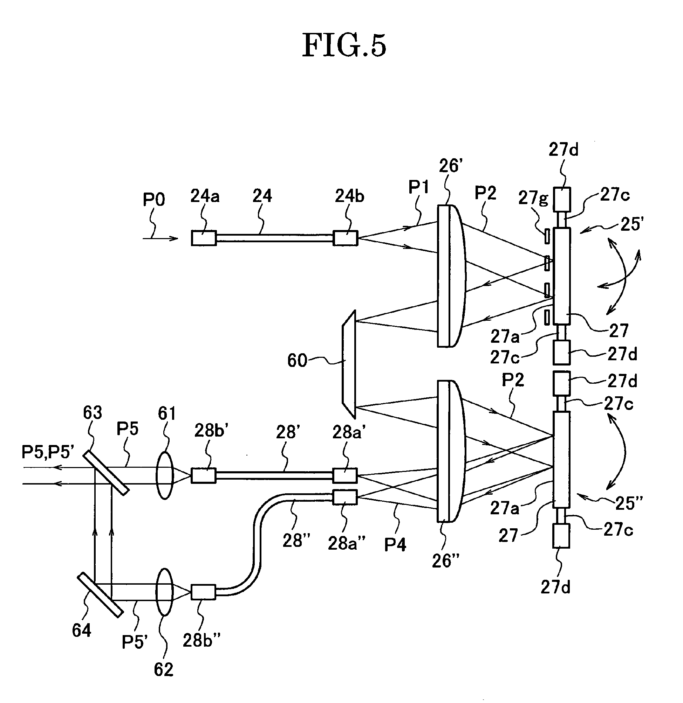

FIG 5 is an optical diagram illustrating a chief part of embodiment 2 of the mixing apparatus which uses modulated light. In FIG. 5, components which are the same as those in embodiment 1 are denoted by the same numerals, and detailed descriptions will be omitted. Descriptions will be provided chiefly for components which are different from those in embodiment 1.

This mixing apparatus includes a first reflective swinging device 25' and a second reflective swinging device 25" in combination. The first reflective swinging device 25' shifts laser light, and the second reflective swinging device 25" functions as an optical switch for selectively switching directions in which the laser light should be reflected.

The distance measuring apparatus measures a distance by emitting laser light as range-finder light, and by receiving and detecting light reflected off the object of measurement. The distance measuring apparatus is classified into three types: a prism type which uses a reflection prism 34 as its object of measurement, a non-prism type which uses a natural thing or an artificial thing as its object of measurement instead of the reflection prism 34, and a combination type which includes a prism mode and a non-prism mode.

In a case of using the reflection prism 34, a smaller power of light is enough for the range-finder light because the reflection prism 34 has high reflection efficiency. The distance measuring apparatus using no reflection prism 34 needs to output larger power. With this difference taken into consideration, embodiment 2 adopts different modes of measurement light emission depending on whether or not the reflection prism is used for the distance measuring apparatus.

The first reflective swinging device 25' includes the micro-electromechanical system 27 having the mirror plate 27a and the diffraction grating 27g. The second reflective swinging device 25" includes the micro-electromechanical system 27 having the mirror plate 27a.

In the case of embodiment 2, a collimator lens 26' as a first optical system for guiding the laser light P1 from the laser light source to the mirror surface of the first reflective swinging device is provided between the optical fiber 24 and the first reflective swinging device 25'. This collimator lens 26' plays a role of turning the laser light emitted from the emission end 24b of the optical fiber 24 into the parallel luminous flux P2. The parallel luminous flux P2 guided to the mirror surface of the first reflective swinging device 25' is guided to the collimator lens 26' once again, and is thus turned into a focused light beam. This focused light beam is transmitted through a trapezoidal prism 60 while guided by light-guiding elements such as the micro trapezoidal prism 60, a light-guiding fiber and a kaleid, and is thus guided to a collimator lens 26". The resultant focused light beam is again turned into a parallel luminous flux by the collimator lens 26", and is thus guided to the second reflective swinging device 25". The second reflective swinging device 25" is used to selectively switch between the guiding of the light to a later-described first optical fiber 28' and the guiding of the light to a second optical fiber 28".

The first optical fiber 28' and the second optical fiber 28" are used to guide the light to a reflective surface 32a of a prism 32 constituting a part of an emitter. The trapezoidal prism 60 and the collimator lens 26" function as a second optical system for guiding the laser light P2 reflected by the mirror surface of the first reflective swinging device 25' to the mirror surface of the second reflective swinging device 25".

The laser light P2 guided to the second reflective swinging device25' is guided to any one of the first optical fiber 28' and the second optical fiber 28" by switching the transmission path. The focused laser beam guided to any one of the first optical fiber 28' and the second optical fiber 28" is shifted within a range of incidence of the focused laser beam on a corresponding one of an incidence end 28a' and an incidence end 28a" by the first reflective swinging device 25".

A beam expander lens 61 is provided in front of an emission end 28b' of the first optical fiber 28', and a collimator lens 62 is provided in front of an emission end 28b" of the second optical fiber 28". The beam expander lens 61 plays a role of guiding to the reflective surface 32a the laser beam P5, which is emitted from the emission end 28' after being transmitted through the first optical fiber 28', while enlarging the diameter of the spot of the laser beam P5. The collimator lens 62 plays a role of guiding to the reflective surface 32a the laser beam P5', which is emitted from the emission end 28b" after being transmitted through the second optical fiber 28", while shaping the laser beam P5' into narrow parallel beams. A light path combining mirror 63 is provided in the middle of the light path of the laser beam P5 emitted from the beam expander lens 61, whereas a reflective mirror 64 for reflecting the laser beam P5' toward the light path combining mirror 63 is provided in the middle of the light path of the laser beam P5' emitted from the collimator lens 62. Thus, the laser beam P5' is guided to the reflective surface 32a of the prism 32 while going through the same light path as the laser beam P5.

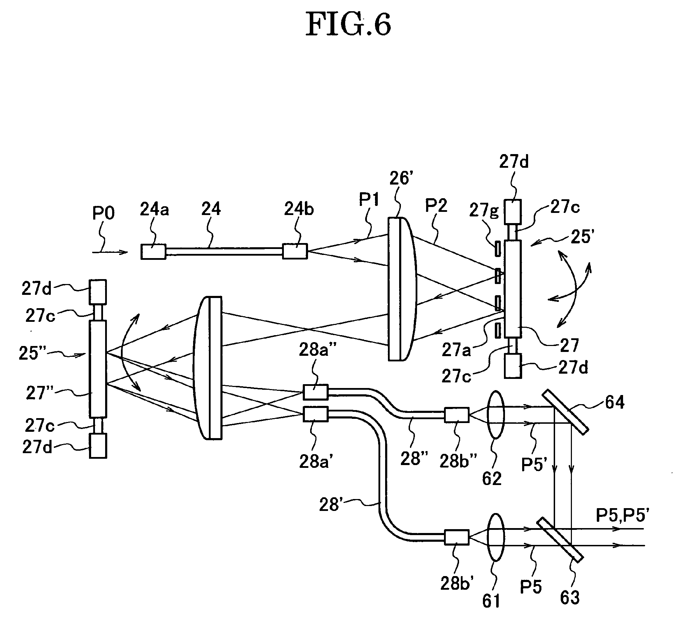

FIG. 6 is an optical diagram illustrating a chief part of a modification of the mixing apparatus illustrated in FIG. 5. This optical diagram illustrates an example of a mixing apparatus constructed in a compact size, from which the trapezoidal prism 60 is removed, and in which the arrangement of the optical elements is modified. The operation of the mixing apparatus is similar to that of the mixing apparatus illustrated in FIG. 5, and therefore detailed descriptions will be omitted. In addition, in FIG. 6, optical elements which are the same as those illustrated in FIG. 5 are denoted by the same reference numerals, and detailed descriptions thereof will be omitted.

## Claims

1. A mixing apparatus which mixes laser light in the middle of guiding the laser light from a laser light source to an emitter, **characterized by** comprising:
a reflective swinging device having a swingable mirror surface;
an optical fiber which guides the laser light to the emitter; and
an optical system which guides the laser light from the laser light source to the mirror surface of the reflective swinging device, and which collects the laser light reflected off the mirror surface toward an input end of the optical fiber,
wherein the reflective swinging device moves the laser light within a range of incidence of the laser light on the input end of the optical fiber.

2. The mixing apparatus according to claim 1, **characterized in that** the reflective swinging device is a micro-electromechanical system which drives the mirror surface by use of a comb actuator.

3. The mixing apparatus according to claim 2, **characterized in that** a diffraction grating plate is provided on a front surface of the mirror plate.

4. A mixing apparatus which mixes laser light in the middle of guiding the laser light from a laser light source to an emitter, **characterized by** comprising:
a first reflective swinging device having a swingable mirror surface;
a first optical fiber which guides the laser light to the emitter;
a second optical fiber which guides the laser light to the emitter;
a second reflective swinging device having a swingable mirror surface, and which functions as an optical switch for selectively switching a transmission path of the laser light between the first optical fiber and the second optical fiber;
a first optical system which guides the laser light from the laser light source to the mirror surface of the first reflective swinging device; and
a second optical system which guides the laser light reflected off the mirror surface to the mirror surface of the second reflective swinging device,
wherein the first reflective swinging device moves the laser light within a range of incidence of the laser light on an input end of the first optical fiber or on an input end of the second optical fiber.

5. The mixing apparatus according to claim 1, **characterized in that** the reflective swinging device is integrally structured on a circuit board or on a chip.

6. The mixing apparatus according to claim 4, **characterized in that** the first and second reflective swinging devices are integrally structured on a circuit board or on a chip.

7. A distance measuring apparatus which measures a distance by irradiating laser light on an object of measurement and which receives light reflected off the object of measurement, **characterized by** comprising
a mixing apparatus which mixes the laser light in the middle of guiding the laser light from a laser light source to an emitter,
wherein the mixing apparatus includes:
a reflective swinging device having a swingable mirror surface;
an optical fiber which guides the laser light to the emitter; and
an optical system which guides the laser light from the laser light source to the mirror surface of the reflective swinging device, and which collects the laser light reflected off the mirror surface toward an input end of the optical fiber, and
wherein the reflective swinging device moves the laser light within a range of incidence of the laser light on the input end of the optical fiber.

8. A distance measuring apparatus which measures a distance by irradiating laser light on an object of measurement and receiving light reflected off the object of measurement, **characterized by** comprising
a mixing apparatus which mixes the laser light in the middle of guiding the laser light from a laser light source to an emitter,
wherein the mixing apparatus includes:
a first reflective swinging device having a swingable mirror surface;
a first optical fiber which guides the laser light to the emitter;
a second optical fiber which guides the laser light to the emitter;
a second reflective swinging device having a swingable mirror surface, and which functions as an optical switch for selectively switching a transmission path of the laser light between the first optical fiber and the second optical fiber;
a first optical system which guides the laser light from the laser light source to the mirror surface of the first reflective swinging device; and
a second optical system which guides the laser light reflected off the mirror surface to the mirror surface of the second reflective swinging device, and
wherein the first reflective swinging device moves the laser light within a range of incidence of the laser light on an input end of the first optical fiber or on an input end of the second optical fiber.

9. The distance measuring apparatus according to claim 7, **characterized in that** the reflective swinging device is integrally structured on a circuit board or on a chip.

10. The distance measuring apparatus according to claim 8, **characterized in that** the first and second reflective swinging devices are integrally structured on a circuit board or on a chip.
